(19) Europäisches Patentamt
European Patent Office
Office européen des brevets

(11) **EP 1 359 717 B1**

(12) **FASCICULE DE BREVET EUROPEEN**

(45) Date de publication et mention
de la délivrance du brevet:
**13.08.2008 Bulletin 2008/33**

(51) Int Cl.:
***H04L 12/56*** *(2006.01)*

(21) Numéro de dépôt: **03290907.9**

(22) Date de dépôt: **11.04.2003**

(54) **Procédé de partage de la largeur de bande disponible pour des flux monodestination et multidestination dans un noeud de commutation asynchrone**

Verfahren zur Bandbreitenteilung zwischen Einfachsendeflüssen und Mehrfachsendeflüssen in einer asynchronen Vermittlungsstelle

Method for sharing available bandwidth among unicast and multicast flows in an asynchronous switching node

(84) Etats contractants désignés:
**AT BE BG CH CY CZ DE DK EE ES FI FR GB GR HU IE IT LI LU MC NL PT RO SE SI SK TR**

(30) Priorité: **15.04.2002 FR 0204679**

(43) Date de publication de la demande:
**05.11.2003 Bulletin 2003/45**

(73) Titulaire: **Alcatel Lucent**
**75008 Paris (FR)**

(72) Inventeur: **Henrion, Michel**
**92100 Boulogne-Billancourt (FR)**

(74) Mandataire: **Korakis-Ménager, Sophie et al**
**Alcatel Lucent**
**Intellectual Property & Standards**
**54 rue La Boétie**
**75008 Paris (FR)**

(56) Documents cités:
**EP-A- 0 678 996**

- **WORSTER T ET AL: "BUFFERING AND FLOW CONTROL FOR STATISTICAL MULTIPLEXING IN AN ATM SWITCH" ISS '95. WORLD TELECOMMUNICATIONS CONGRESS. (INTERNATIONAL SWITCHING SYMPOSIUM). ADVANCED SWITCHING TECHNOLOGIES FOR UNIVERSAL TELECOMMUNICATIONS AT THE BEGINNING OF THE 21ST. CENTURY. BERLIN, APR. 23 - 28, 1995, PROCEEDINGS OF THE INTERNATIONAL SWIT, vol. 1 SYMP. 15, 23 avril 1995 (1995-04-23), pages 273-277, XP000495578 ISBN: 3-8007-2093-0**
- **KIRSTADTER A: "Fair and flexible contention resolution for input buffered ATM switches based on LAN medium access control protocols" BROADBAND COMMUNICATIONS. GLOBAL INFRASTRUCTURE FOR THE INFORMATION AGE. PROCEEDINGS OF THE INTERNATIONAL IFIP-IEEE CONFERENCE ON BROADBAND COMMUNICATIONS, CANADA, 1996, LONDON, CHAPMAN AND HALL, GB, 23 avril 1996 (1996-04-23), pages 370-381, XP010525736 ISBN: 0-412-75970-5**

**Description**

La présente invention concerne un procédé de partage de la largeur de bande de commutation disponible pour transférer des cellules de flux monodestination et multidestination dans un noeud de commutation asynchrone.

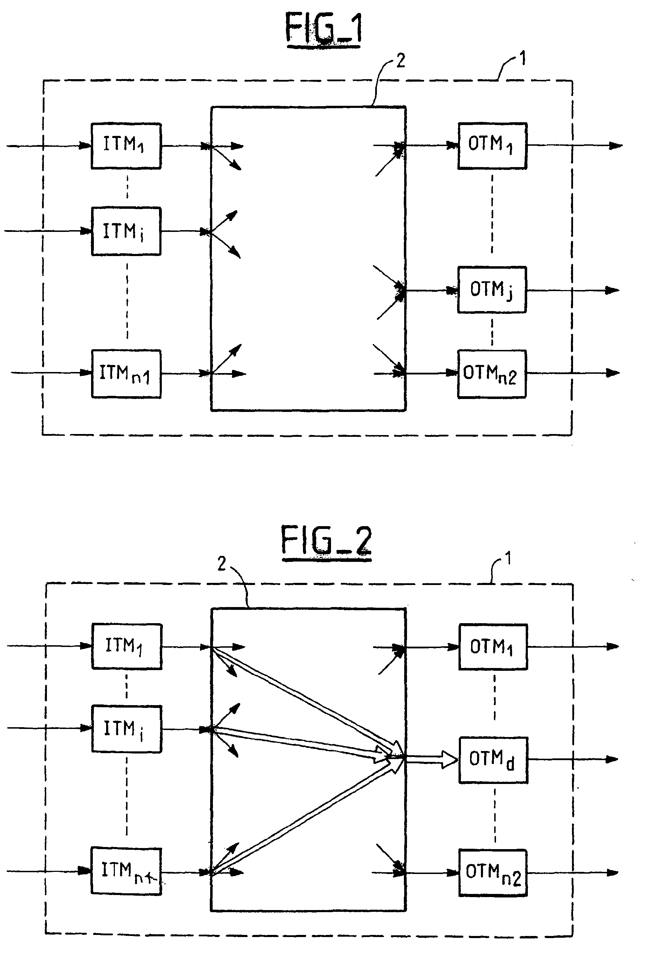

Un tel noeud de commutation 1 comporte, comme représenté sur la figure 1, une pluralité ($n_1$) de modules terminaux d'entrée ou modules d'entrée, $ITM_1$, ..., $ITM_i$, ..., $ITMn_1$, qui sont interconnectés avec une pluralité de $n_2$ modules terminaux de sortie, ou modules de sortie, $OTM_1$, ..., $OTM_j$, ..., $OTMn_2$, par l'intermédiaire d'un réseau de commutation asynchrone 2, selon un agencement classique. Une telle représentation séparée de $n_1$ modules d'entrée et de $n_2$ modules de sortie peut correspondre soit à une réalisation de modules d'entrée et de sortie qui sont physiquement séparés, soit à une séparation logique de deux types de fonctions, d'entrée et de sortie, réalisées dans des modules terminaux mixtes groupant ces deux types de fonctions, auquel cas les nombres de modules $n_1$ et $n_2$ sont généralement égaux.

Ce noeud de commutation permet de transférer un bloc de données reçu dans un module d'entrée de rang i quelconque $ITM_i$ à au moins un module de sortie de rang j quelconque $OTM_j$, à travers son réseau de commutation 2 selon un mode d'acheminement interne quelconque, par exemple du type sans connexion ou avec connexion. Un bloc de données externes reçu sur un port entrant d'un module d'entrée peut être commuté pour sortir sur un port sortant d'un module de sortie donné; on parle dans ce cas d'un bloc de données "monodestination"; il peut aussi être commuté par le réseau 2 pour sortir sur des ports sortants d'une pluralité de modules de sortie différents; on parle dans ce cas d'un bloc de données dit multidestination.

Selon des techniques connues, les blocs de données externes qui sont reçus sous forme de paquets de longueur variable sont transformés en cellules de format interne dans les modules d'entrée, typiquement par segmentation de paquet. Une fois transférées aux modules de sortie destinataires à travers le réseau de commutation, les cellules de format interne sont retransformées en blocs de données externes, cellules ou paquets, typiquement par réassemblage de cellules en cas de blocs de données externes à transmettre sous forme de paquets de longueur variable. A l'intérieur du noeud de commutation, quel que soit le type de blocs de données externes, le réseau de commutation asynchrone considéré commute alors des cellules de format interne, chaque cellule étant transférée d'un module entrant vers au moins un module de sortie destinataire. On ne considère dans la suite que ces cellules de format interne, dans la mesure où le problème de l'invention concerne le transfert interne de ces cellules dans le noeud de commutation et non pas les blocs de données externes.

Dans les modules d'entrée de ce noeud, on considère donc deux types de cellules à transférer à travers le réseau de commutation de cellules 2: un premier type de cellule dite monodestination UC, qui doit être acheminée vers un seul module de sortie destinataire donné, et un second type de cellule dite multidestination MC, qui doit être acheminée vers une pluralité de N modules de sortie destinataires donnés parmi les n2 modules de sortie du noeud (où $1 < N \leq n2$).

Dans le cas des cellules multidestination, pour effectuer la transformation requise d'une telle cellule en N cellules à fournir à chacun des N modules de sortie destinataires, deux méthodes classiques sont connues :

- la première méthode consiste à générer N copies d'une cellule multidestination dans le module d'entrée, de sorte que ce dernier transmette en fait, au réseau de commutation, N cellules monodestination, chacune étant destinée à l'un des N modules de sortie destinataires requis pour cette cellule multidestination;
- la seconde méthode consiste à transmettre au réseau de commutation, à partir du module d'entrée, un seul exemplaire de la cellule multidestination MC, le réseau de commutation étant alors lui-même capable, selon une technique connue, de générer les N cellules copiées UCa, ..., UCn à partir d'une cellule multidestination tout en acheminant chacune de ces N cellules copiées pour les fournir à chacun des N modules de sortie destinataires requis pour cette cellule multidestination.

L'invention concerne cette seconde méthode.

La figure 2 illustre des flux sortants de cellules fournies à un module de sortie donné OTMd, en provenance des différents modules d'entrée ITM1, ..., ITMn1, dans le noeud de commutation **1**. Les flux de cellules transférées à travers le réseau de commutation risquent de créer une congestion dans ce réseau chaque fois que le débit global du trafic de cellules fournies à un module de sortie, tel OTMd, devient excessif par rapport à la largeur de bande autorisée pour accéder à ce module de sortie, dans la mesure où la capacité de transfert de cellules à travers le réseau de commutation est physiquement limitée par des caractéristiques propres à ce réseau.

Afin d'éviter de telle situation de congestion dans le réseau de commutation, il est classiquement prévu de réguler, dans chaque module d'entrée, les débits de transfert de cellules vers chaque module de sortie du noeud, de telle sorte que le débit global du trafic de cellules fournies à chaque module de sortie ne soit pas excessif.

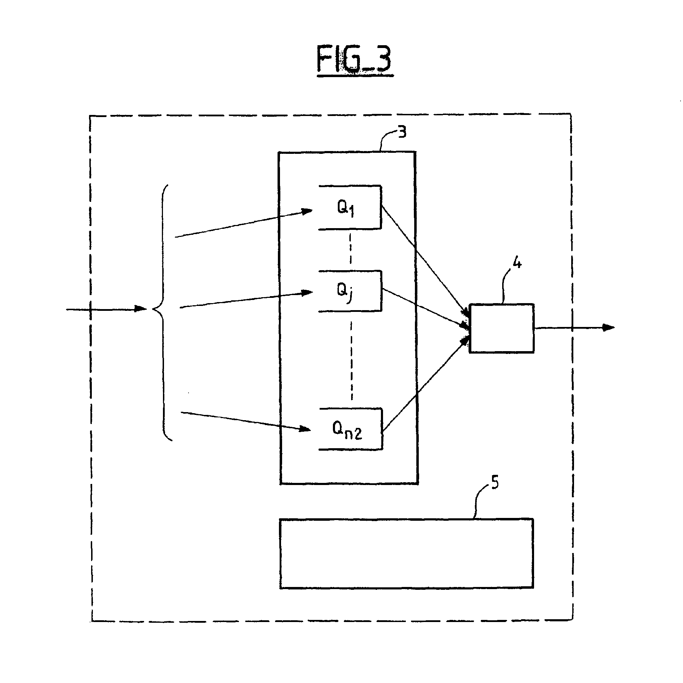

A cet effet, selon une technique connue, chaque module d'entrée, tel qu'illustré sur la figure 3, est doté de mémoires tampon 3 permettant un stockage temporaire des cellules, et ces mémoires tampon sont structurées en une pluralité de files d'attente Q1, ..., Qj, ..., Qn2 qui sont gérées respectivement pour chaque flux de cellules sortant correspondant au sous-ensemble des cellules fournies, par le réseau de commutation, à un module de sortie donné.

Selon cette technique utilisée dans un tel module d'entrée ITMi, après traitement par des fonctions connues d'interface d'entrée et de conversion en cellules internes (non représentées sur la figure 3), les cellules sont distribuées aux différentes files d'attente, telles Q1, ..., Qj, ..., Qn2, en fonction de leur module de sortie destinataire OTM1, ..., OTMj, ..., OTMn2. Pour sortir une cellule d'une file d'attente et la transmettre au réseau de commutation, un multi-serveur de files d'attente 4 utilise l'un de ses cycles de service pour lire les donnés correspondantes dans la file d'attente et les en extraire. Un tel multi-serveur de files d'attente distribue ses cycles de service aux différentes files d'attente, proportionnellement au débit de service de cellules GOCRj attribué à chaque file d'attente Qj pour transférer cellules destinées au module de sortie OTMj correspondant. Le fonctionnement de l'ensemble des files d'attente d'un module d'entrée est commandé par une unité de gestion de files d'attente 5, ici supposée affectée à ce module d'entrée, comme schématisé sur la figure 3. Cette unité de gestion des files d'attente commande le départ des cellules stockées dans les mémoires tampon vers le réseau de commutation à des temps de service fonction d'un débit de service de cellules attribué à chacun des flux de cellules.

La constitution des modules de sortie du noeud 1, n'est pas détaillée ici dans la mesure où chaque module de sortie peut être réalisé de manière classique, avec une pluralité de registres ou de mémoires permettant de réceptionner les blocs de données, les convertir en cellules internes, et transmettre ensuite ces cellules vers les fonctions d'interface de sortie de ce module d'entrée. La constitution des mémoires tampon, du multi-serveur de files d'attente ou de l'unité de gestion de files d'attentes n'est pas non plus détaillée et peut impliquer des moyens matériels, notamment processeurs et mémoires, ainsi que des moyens logiciels appropriés et connus en tant que tels.

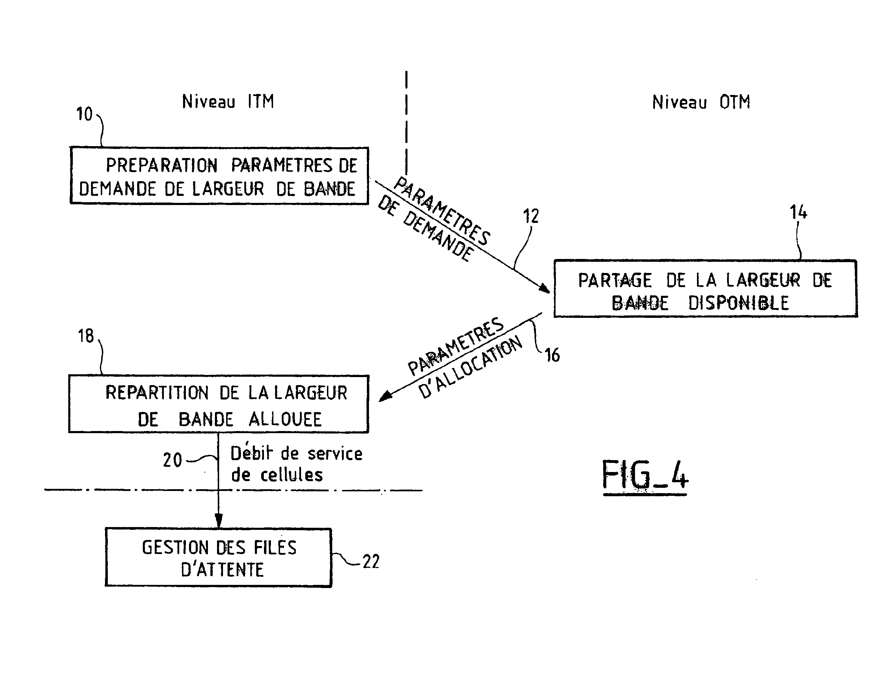

La figure 4 montre est un schéma de principe des étapes mises en oeuvre pour le partage de la largeur de bande disponible pour des flux monodestination, dans le noeud de commutation des figures 1 à 3. La figure 4 dans son ensemble est représentative d'un mécanisme de contrôle de flux interne au noeud de commutation; un tel mécanisme de contrôle de flux est décrit dans un article intitulé "Buffering and Flow Control for Statistical Multiplexing in an ATM Switch" de T. WORSTER & al, qui a été publié en avril 1995 dans le volume n°1 pages 273-277 du compte-rendu du Symposium de Commutation ISS 95.

Selon le procédé décrit, pour réaliser dynamiquement un partage de la largeur de bande de commutation globalement disponible au niveau d'un noeud, il est prévu :

- une évaluation du volume de trafic en attente stocké temporairement dans des files d'attente d'entrée que comporte chaque module d'entrée, pour chacun des modules de sortie susceptible d'être destinataire vis-à-vis de lui ;
- une détermination, en fonction du volume de trafic en attente observé, d'un paramètre dit de demande de largeur de bande, pour chaque couple formé par un module d'entrée donné et un module de sortie destinataire donné ;
- une collecte de ces paramètres de demande de largeur de bande concernant chaque module de sortie destinataire, auprès des différents modules d'entrée ;
- un partage, pour chaque module de sortie, de la largeur de bande de commutation, disponible vers ce module de sortie destinataire, en fonction de ces différents paramètres de demande de largeur de bande relatifs aux différents modules d'entrée ;
- la fourniture à chaque module d'entrée d'un paramètre d'allocation de largeur de bande, pour chacun des couples de modules qu'il forme avec les différents modules de sortie du noeud.

La mise en oeuvre d'un tel procédé au niveau d'un mécanisme interne de contrôle de flux d'un noeud asynchrone de commutation permet de partager la largeur de bande de commutation disponible, à partir des valeurs de paramètres de demande de largeur de bande déterminées en fonction du volume de trafic en attente observé au niveau des files d'attente des modules d'entrée du noeud.

Un tel mécanisme de contrôle de flux repose sur l'utilisation, du point de vue du trafic, d'un concept de conduit virtuel d'entrée / sortie VIEPi/j (initiales de l'expression anglaise "Virtual Ingress / Egress Pipe"), pour chaque couple (ITMi, OTMj) d'un module d'entrée ITMi et d'un module de sortie OTMj.

On a représenté sur la partie gauche de cette figure 4 les étapes mises en oeuvre au niveau des modules d'entrée, et sur la partie droite de la figure l'étape de partage de largeur de bande disponible mise en oeuvre au niveau des modules de sortie ou de façon plus centralisée.

La première étape 10, mise en oeuvre par le mécanisme de contrôle de flux dans chaque module d'entrée ITMi, est une étape de préparation d'un paramètre de demande de largeur de bande BRi/j, pour chaque couple (ITMi, OTMj) constitué par ce module d'entrée ITMi et un module de sortie OTMj. Pour chaque couple (ITMi, OTMj) donné, cette étape consiste à accumuler les différentes demandes de largeur de bande individuelles U-BR[i/j]p de chacun des différents flux monodestination UF[i/j]p présents dans le module d'entrée ITMi et destinés au module de sortie OTMj de ce couple de modules.

Pour chaque flux monodestination UF[i/j]p présent dans le module d'entrée ITMi, le paramètre de demande de largeur de bande individuelle U-BR[i/j]p peut par exemple avoir une valeur qui est déterminée en fonction du nombre de cellules appartenant à flux qui sont stockées dans les mémoires tampon du module d'entrée. On peut utiliser aussi d'autres formes de demande de largeur de bande, par exemple dont la valeur est déterminée en fonction du poids relatif de la priorité associé à chacun des flux, tel que décrit dans la demande de brevet français No 01 12446 déposée le 27/09/2001.

Cette première étape 10 fournit ainsi, pour l'ensemble des couples de modules (ITMi, OTMj), des paramètres de demande de largeur de bande BRi/j par couple de modules. Ces paramètres sont fournis en entrée de la deuxième étape 14 de la figure 4, comme symbolisé sur la figure par la flèche 12.

La deuxième étape 14, mise en oeuvre par le mécanisme de contrôle de flux pour chaque module de sortie OTMj donné, est une étape de partage, en fonction des paramètres de demande de largeur de bande BRi/j par couple de modules établis lors de la première étape, de la largeur de bande disponible pour accéder à ce module de sortie donné, c'est-à-dire pour le trafic de cellules de l'ensemble des flux monodestination relatifs aux différents couples de modules (ITMi/OTMj) ayant ce même module de sortie OTMj donné comme destinataire. Cette étape de partage est relative chaque module de sortie, mais elle peut s'effectuer physiquement au niveau de chaque module de sortie, ou encore à un niveau plus centralisé. Cette deuxième étape fournit, pour chacun des conduits virtuels d'entrée / sortie VIEPi/j, un paramètre d'allocation de largeur de bande BGi/j par couple de modules. Pour le couple de modules (ITMi, OTMj) correspondant à ce conduit virtuel, ce paramètre d'allocation de largeur de bande par couple peut être utilisé pour réguler le transfert des cellules de l'ensemble des flux monodestination relatifs à ce couple de modules, c'est-à-dire en provenance du module d'entrée ITMi et destiné au module de sortie OTMj.

La troisième étape symbolisée sur la figure 4 par la flèche 16 est une étape de fourniture, à chacun des modules d'entrée ITMi, des différents paramètres d'allocation de largeur de bande BGi/j relatifs aux couples de modules (ITMi/ OTMj) ayant ce module d'entrée comme source. A l'issue de cette troisième étape, un module d'entrée ITMi dispose donc des paramètres d'allocation de largeur de bande BGi/j vers chaque module de sortie OTMj pour lequel le module d'entrée avait fourni lors de la première étape un paramètre de demande de largeur de bande BRi/j pour le couple de modules (ITMi, OTMj) correspondant. Un paramètre d'allocation de largeur de bande BGi/j entre un module d'entrée ITMi et un module de sortie OTMj correspond, en termes de trafic, à la modélisation conceptuelle d'un conduit virtuel d'entrée sortie VIEPi/j entre le module d'entrée ITMi et le module de sortie OTMj.

La quatrième étape, symbolisée par la référence 18 sur la figure 4, est une étape de répartition de largeur de bande allouée par couple de modules, qui s'effectue au niveau de chaque module d'entrée ITMi. A partir de chacun de ces paramètres d'allocation de largeur de bande BGi/j par couple de modules (ITMi, OTMj), on répartit cette largeur de bande allouée en déterminant l'allocation de largeur de bande individuelle U-BG[i/j]p pour chacun des flux monodestination UF[i/j]p relatifs à ce couple de modules (ITMi, OTMj). Cette largeur de bande allouée individuelle U-BG[i/j]p constitue le débit de service de cellules SSR[i/j]p attribué à chacun de ces flux.

La figure 4 montre encore par la flèche 20, la fourniture des différents débits de service de cellules SSR[i/j]p attribués à chacun des flux. Ces différents débits de service de cellules sont fournis à l'unité de gestion de files d'attente 5 de la figure 3, pour commander l'ordre respectif des cellules des différents flux dans les files d'attente 3, comme symbolisé par la référence 22 de la figure 4. Le trait en pointillés sur la figure 4, entre l'étape de répartition référencée 18 et l'étape de gestion des files d'attente 22 indique que cette étape 22 de gestion des files d'attente ne fait pas partie du mécanisme de contrôle de flux.

Le mécanisme de contrôle de flux de la figure 4 est conçu pour réguler le trafic de flux de cellules monodestination, qui sont bien adaptés à un traitement par couple de modules (ITMi, OTMj) selon le concept de conduit virtuel d'entrée / sortie VIEPi/j. Il ne s'applique toutefois pas à des flux de cellules multidestination, étant donné leur pluralité de modules de sortie destinataires qui n'est pas compatible avec le concept de conduit virtuel d'entrée / sortie par couple de modules. Il existe donc un besoin d'un procédé de partage de la largeur de bande de commutation disponible pour transférer des cellules de flux monodestination et multidestination dans un noeud de commutation asynchrone.

L'invention propose en conséquence un procédé de partage de la largeur de bande de commutation disponible pour transférer des cellules de flux monodestination et multidestination dans un noeud de commutation asynchrone, dans lequel

- n1 modules d'entrées ITM1, ..., ITMi, ..., ITMn1 sont interconnectés avec n2 modules de sortie OTM1, ..., OTMj, ..., OTMn2 par un réseau de commutation de cellules qui transfère chaque cellule d'un module d'entrée vers au moins un module de sortie;
- ledit réseau de commutation achemine une cellule transmise par un module d'entrée, vers un seul module de sortie destinataire donné OTMd dans le cas d'une cellule d'un flux monodestination UF, et vers N modules de sortie destinataires OTMa, ..., OTMn donnés, parmi les n2 modules de sortie du noeud, dans le cas d'une cellule d'un flux multidestination MF, ce réseau générant lui-même les N cellules copiées correspondantes à partir de la cellule transmise par un module d'entrée pour le flux multidestination;
- chaque module d'entrée est doté de mémoires tampon permettant un stockage temporaire des cellules desdits flux monodestination et multidestination, et le départ de ces cellules stockées des mémoires tampon vers ledit réseau de commutation est commandé à des temps de service qui sont fonction d'un débit de service de cellules attribué à chacun des flux de cellules.

Un mécanisme interne de contrôle de flux effectue

- une première étape de préparation d'un paramètre de demande de largeur de bande BRi/j pour chacun des couples de modules ITMi/OTMj relatif à un module d'entrée ITMi donné et à un module de sortie OTMj donné, en cumulant les différentes demandes de largeur de bande individuelles U-BR[i/j]p des différents flux monodestination UF[i/j]p relatifs à ce couple de modules, ensuite
- une seconde étape de partage, pour chaque module de sortie OTMj donné, de la largeur de bande disponible pour le trafic de cellules de l'ensemble des flux monodestination ayant ce même module de sortie OTMj donné comme destinataire, en fonction des paramètres de demande de largeur de bande BRi/j respectifs préparés pour les différents couples de modules ITMi, OTMj ayant ce même module de sortie OTMj donné comme destinataire, puis
- une troisième étape de fourniture, à chacun des modules d'entrée ITMi et pour chacun des couples de modules ITMi/OTMj, d'un paramètre d'allocation de largeur de bande BGi/j, et enfin
- une quatrième étape de répartition, pour chacun des couples de modules ITMi, OTMj, déterminant, à partir du paramètre d'allocation de largeur de bande BGi/j pour ce couple, l'allocation de largeur de bande individuelle U-BG[i/j]p répartie pour chacun des flux monodestination UF[i/j]p relatifs à ce couple, cette l'allocation de largeur de bande U-BG[i/j]p constituant ledit débit de service de cellules SSR[i/j]p attribué à chacun de ces flux.

Selon le procédé de l'invention, on considère le transfert d'une cellule d'un flux multidestination MF[i/a...n]q à travers le réseau de commutation vers N modules de sortie destinataires OTMa, ..., OTMn donnés, comme étant équivalent au transfert simultané de N cellules de N flux monodestination virtuels VUF[i/a]q, ..., VUF[i/n]q respectifs vers ces mêmes N modules de sortie destinataires OTMa, ..., OTMn ; de ce fait, le procédé comprend une étape de conversion préalable à la première étape, dans chacun des modules d'entrée ITMi, de la demande de largeur de bande individuelle M-BR[i/a...n]q de chaque flux multidestination MF[i/a...n]q en N demandes de largeur de bande individuelles VU-BR[i/a]q, ..., VU-BR[i/n]q relatives auxdits N flux monodestination virtuels VUF[i/a]q, ..., VUF[i/n]q équivalents relatifs à ce flux multidestination.

La première étape de préparation, pour chacun des couples de modules ITMi, OTMj, d'un paramètre de demande de largeur de bande BRi/j est ensuite effectuée en cumulant alors les demandes de largeur de bande individuelles U-BR[i/j]p des différents flux monodestination réels UF[i/j]p relatifs à ce couple de modules, ainsi que les demandes de largeur de bande individuelles VU-BR[i/j]q converties pour les différents flux monodestination virtuels VUF[i/j]q, également relatifs à ce couple de modules.

Le mécanisme interne de contrôle de flux peut alors effectuer les seconde étape de partage et troisième étape de fourniture, sur la base de paramètres de demande de largeur de bande BRi/j et de paramètres d'allocation de largeur de bande BGi/j, par couple de modules ITMi/OTMj ainsi obtenus.

La quatrième étape de répartition du mécanisme interne de contrôle de flux, détermine alors, à partir de chacun des paramètres d'allocation de largeur de bande BGi/j par couple de modules, l'allocation de largeur de bande individuelle U-BG[i/j]p répartie pour chacun des flux monodestination réels UF[i/j]p relatifs à ce couple, ainsi que l'allocation de largeur de bande individuelle VU-BG[i/j]q répartie pour chacun des flux monodestination virtuels VUF[i/j]q, également relatifs à ce couple de modules, qui correspondent à des flux multidestination MF[i/a...n]q ayant le module de sortie OTMj de ce couple parmi ses N modules de sortie destinataires.

Le procédé comprend enfin une étape complémentaire de détermination de l'allocation de largeur de bande individuelle M-BG[i/a...n]q pour chacun des flux multidestination MF[i/a...n]q, en tenant compte des différentes allocations de largeur de bande individuelles VU-BG[I/a]q, ..., VU-BG[i/n]q réparties pour chacun des N flux monodestination virtuels VUF[i/a]q, ..., VUF[i/n]q équivalents relatifs à ce flux multidestination MF[i/a...n]q. Dans un mode de réalisation, l'étape préalable de conversion, dans chacun des modules d'entrée ITMi, détermine, pour chaque flux multidestination MF[i/a...n]q, N paramètres de demande de largeur de bande individuelles VU-BR[i/a]q, ..., VU-BR[i/n]q, pour lesdits N flux monodestination virtuels VUF[i/a]q, ..., VUF[i/n]q équivalents relatifs à ce flux multidestination, dont les valeurs sont toutes égales à la valeur du paramètre de demande de largeur de bande individuelle M-BR[i/a...n]q de ce flux multidestination.

Dans un autre mode de réalisation, la demande de largeur de bande individuelle de chacun des différents flux monodestination U-BR[i/j]p et multidestination (MF[i/a...n]q) est un paramètre dont la valeur est déterminée en fonction de nombre de cellules, appartenant à ce flux, qui sont stockées dans les mémoires tampon du module d'entrée.

Alternativement, la demande de largeur de bande individuelle de chacun des différents flux monodestination U-BR[i/j]p et multidestination (MF[i/a...n]q) peut être un paramètre dont la valeur est déterminée en fonction d'un indicateur de priorité affecté à ce flux dans le module d'entrée.

Dans encore un autre mode de réalisation, lors de l'étape complémentaire de détermination, la valeur de l'allocation de largeur de bande individuelle MBG[I/a...n]q, pour chacun des flux multidestination MF[i/a...n]q, est déterminée comme étant au plus égale à la plus petite valeur parmi les N valeurs d'allocation de largeur de bande individuelles VU-BG[I/a]q, ..., VU-BG[i/n]q réparties pour chacun des N flux monodestination virtuels VUF[i/a]q, ..., VUF[i/n]q équivalents relatifs à ce flux multidestination MF[i/a...n]q.

L'invention propose enfin un noeud de commutation asynchrone, avec n1 modules d'entrées ITM1, ..., ITMi, ..., ITMnl interconnectés avec n2 modules de sortie OTM1, ..., OTMj, ..., OTMn2 par un réseau de commutation de cellules, le noeud présentant des moyens de mise en oeuvre de ce procédé.

D'autres caractéristiques et avantages de l'invention apparaîtront à la lecture de la description qui suit de modes de réalisation de l'invention, donnés à titre d'exemple uniquement et en référence aux dessins annexés, qui montrent :

- la figure 1 est un schéma de principe d'un noeud de commutation permettant la mise en oeuvre du procédé selon l'invention;
- la figure 2 est un schéma illustrant des flux sortants de cellules fournies à un module de sortie donné, en provenance des différents modules d'entrée, dans un noeud de commutation tel qu'illustré sur la figure 1;
- la figure 3 est un schéma de principe d'un module d'entrée du noeud de commutation des figures 1 et 2;
- la figure 4 est un schéma de principe des étapes mises en oeuvre pour le partage de la largeur de bande disponible pour des flux monodestination, dans le noeud de commutation des figures 1 à 3;
- la figure 5 est un schéma de principe d'un flux multidestination dans un noeud de commutation;
- la figure 6 est un schéma de principe des flux monodestination virtuels équivalents au flux multidestination de la figure 5, selon l'invention;
- la figure 7 est un schéma de principe des étapes mises en oeuvre selon l'invention.

Pour permettre d'utiliser le mécanisme interne de contrôle de flux pour partager la largeur de bande de commutation disponible non seulement pour le trafic de cellules des flux monodestination (UF), mais aussi pour celui des flux multidestination (MF), l'invention propose de considérer que le transfert d'une cellule d'un flux multidestination MF[i/a...n]q à travers le réseau de commutation, depuis un module d'entrée ITMi vers N modules de sortie destinataires OTMa, ..., OTMn, comme équivalent, du point de vue trafic, au transfert simultané de N cellules de N flux monodestination virtuels VUF[i/a]q, ..., VUF[i/n]q respectifs, depuis ce même module d'entrée ITMi vers ces mêmes N modules de sortie destinataires OTMa, ..., OTMn. Les N cellules de ces N flux monodestination virtuels correspondent alors aux N cellules copiées qui sont en réalité générées par le réseau de commutation et fournies par ce réseau aux modules de sortie OTMa, ..., OTMn destinataires.

L'invention propose alors, préalablement à la première étape du mécanisme de contrôle de flux, une étape de conversion, dans chacun des modules d'entrée ITMi, de la demande de largeur de bande individuelle M-BR[i/a...n]q de chaque flux multidestination MF[i/a...n]q en N demandes de largeur de bande individuelles VU-BR[i/a]q, ..., VU-BR[i/n]q pour lesdits N flux monodestination virtuels VUF[i/a]q, ..., VUF[i/n]q équivalents relatifs à ce flux multidestination.

Du fait de cette conversion, dans le mécanisme de contrôle de flux, la première étape de préparation d'un paramètre de demande de largeur de bande BRi/j par couple de modules (ITMi/OTMj) s'effectue en cumulant alors, pour chacun des modules ITMi :

- les demandes de largeur de bande individuelles U-BR[i/j]p des différents flux monodestination réels UF[i/j]p relatifs à ce couple de modules, ainsi que
- les demandes de largeur de bande individuelles VU-BR[i/j]q converties pour les différents flux monodestination virtuels VUF[i/j]q, également relatifs à ce couple de modules, et qui correspondent à des flux multidestination MF[i/a...n]q ayant le module de sortie OTMj de ce couple parmi leurs N modules de sortie destinataires.

Il est ainsi possible pour le mécanisme interne de contrôle de flux d'effectuer normalement la seconde étape de partage et la troisième étape de fourniture, sur la base de paramètres de demande de largeur de bande BRi/j et d'allocation de largeur de bande BGi/j, par couple de modules (ITMi/OTMj), qui tiennent compte du trafic de l'ensemble des flux monodestination réels UF[i/j]p et virtuels VUF[i/j]q relatifs à ce couple de modules. Le mécanisme de contrôle de flux fonctionne donc de façon normale, l'existence de flux multidestination étant masquée, du point de vue de ce mécanisme, par la conversion de chaque flux multidestination en une pluralité de N flux monodestination virtuels.

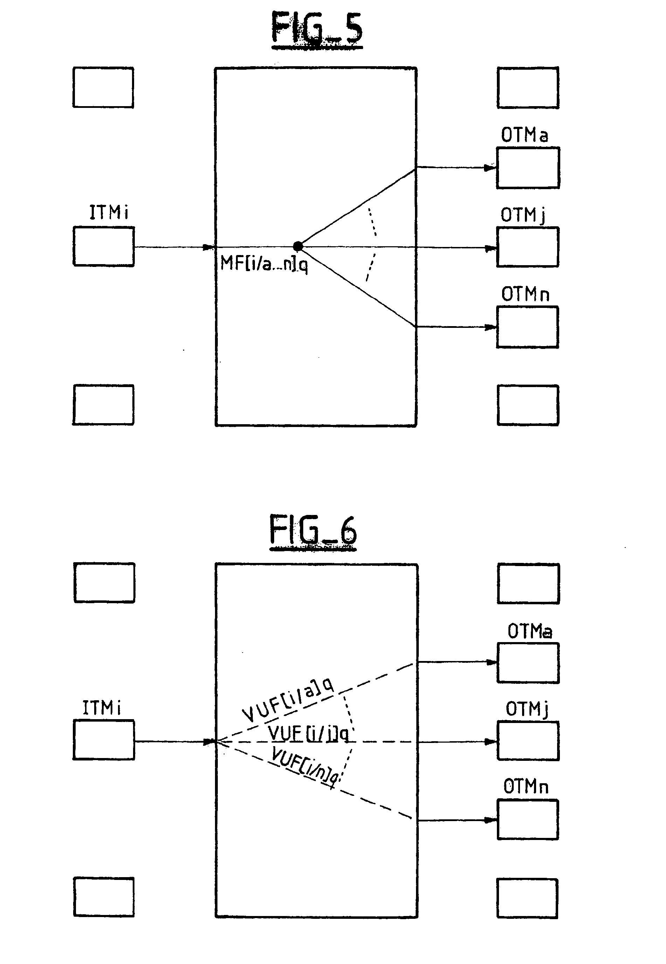

La figure 5 montre un schéma de principe d'un flux multidestination dans un noeud de commutation, tandis que la figure 6 montre la pluralité de flux multidestination virtuels équivalents au flux multidestination de la figure 5. Ces deux figures permettent de comprendre le principe de la conversion des flux multidestination en des flux monodestinations virtuels équivalents du point de vue trafic. La figure 5 reprend les différents éléments de la figure 1 - modules d'entrée, réseau de commutation et modules de sortie. On considère sur la figure 5 un flux multidestination, depuis un module d'entrée ITMi vers une pluralité de N modules de sortie OTMa, ..., OTMj, ..., OTMn. Ce flux multidestination est noté, comme plus haut, MF[i/a...n]q. La figure montre une flèche depuis le module ITMi vers le réseau de commutation; la séparation de cette flèche en N flèches à l'intérieur du réseau de commutation est représentative du fait que les N cellules du flux multidestination, qui correspondent à une cellule transmise par le module d'entrée ITMi, sont générées par le réseau de commutation lui-même. Ces N cellules sont fournies aux N modules de sortie destinataires OTMa, ..., OTMj, ..., OTMn.

Au flux multidestination MF[i/a...n]q de la figure 5 est associée une demande de largeur de bande individuelle M-BR[i/a...n]q. Comme mentionné précédemment dans le cas d'un flux monodestination UF[i/j]p, ce paramètre de demande de largeur de bande individuelle M-BR[i/a...n]q, pour un flux multidestination présent dans le module d'entrée ITMi, peut aussi avoir par exemple une valeur qui est déterminée en fonction du nombre de cellules multidestination, appartenant à ce flux et qui sont stockées dans les mémoires tampon du module d'entrée. L'invention n'étant pas limitée à cet exemple de type de demande, on peut alternativement utiliser d'autres types de demande de largeur de bande, par exemple dont la valeur est déterminée en fonction du poids relatif de la priorité associé à ce flux.

La figure 6 est un schéma de principe des flux multidestination virtuels équivalents au flux multidestination de la figure 5. A l'intérieur du réseau de commutation, chaque cellule du flux multidestination MF[i/a...n]q est, comme expliqué plus haut, considérée comme équivalente au transfert simultané de N cellules de N flux monodestination virtuels VUF[i/a]q, ..., VUF[i/j]q, ..., VUF[i/n]q respectifs, depuis le module d'entrée ITMi vers les N modules de sortie destinataires OTMa, ..., OTMn. La figure illustre ainsi le transfert simultané des N cellules de ces flux monodestination virtuels équivalents.

A chacun de ces N flux monodestination virtuels VUF[i/j]q, j variant de a à n, est associé une demande de largeur de bande individuelle VU-BR[i/j]q. Pour un flux multidestination, les différentes demandes de largeur de bande individuelles VU-BR[i/j]q, j variant de a à n, des flux monodestination virtuels équivalents sont obtenues par conversion de la demande de largeur de bande individuelle M-BR[i/a...n]q du flux multidestination. Cette conversion peut, dans un mode de réalisation de l'invention, consister à affecter à chaque flux monodestination virtuel VUF[i/j]q une demande de largeur de bande individuelle VU-BR[i/j]q qui est égale à la demande de largeur de bande individuelle M-BR[i/a...n]q du flux multidestination auquel sont équivalents les flux monodestination virtuels VUF[i/a]q, ..., VUF[i/j]q, ..., VUF[i/n]q. Cette approche revient à considérer que chacun des flux monodestination virtuels qui composent un flux multidestination exprime une demande en largeur de bande individuelle identique à celle du flux multidestination correspondant.

Les figures 5 et 6 illustrent donc à la fois le principe de considérer un flux multidestination comme un ensemble de flux monodestination virtuels et la conversion de la demande de largeur de bande individuelle du flux multidestination en N demandes de largeur de bande individuelles des flux monodestination virtuels équivalents.

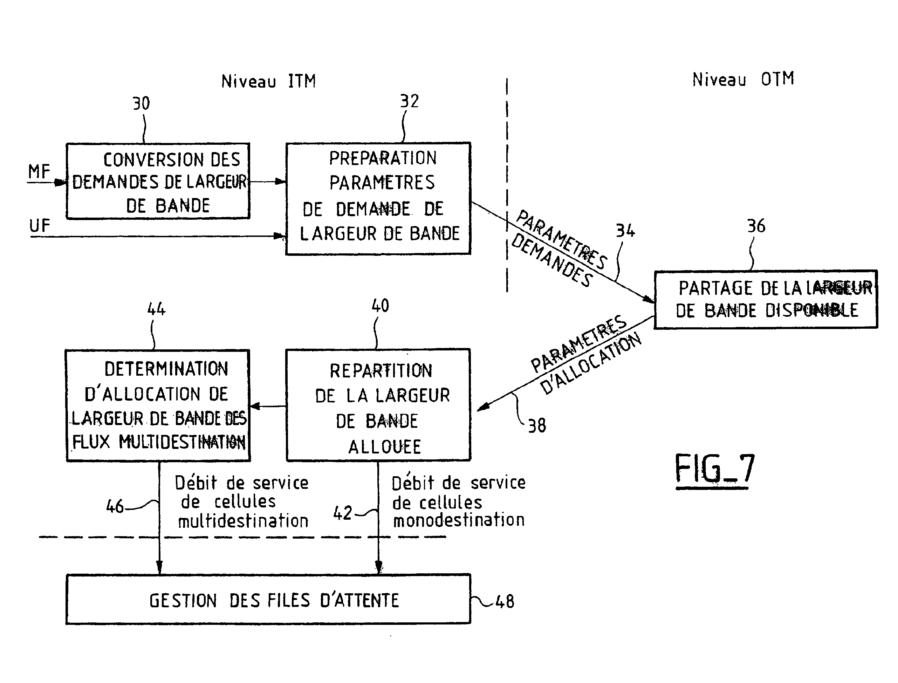

La figure 7 est un schéma de principe des étapes mises en oeuvre selon l'invention; certaines des étapes de la figure 7 correspondent à des étapes de la figure 4, mais la figure 7 montre aussi les étapes qui caractérisent l'invention. La figure montre d'abord sous la référence 30 une étape de conversion. Cette étape de conversion est préalable à la première étape 32 de préparation d'un paramètre de demande de largeur de bande par couple de modules dans le mécanisme de contrôle de flux. Cette étape 30 de conversion s'effectue, comme le montre la figure 7, au niveau des modules d'entrée. Elle comprend, dans chacun des modules d'entrée ITMi, pour chaque flux multidestination MF[i/a...n] q, la conversion de la demande de largeur de bande individuelle M-BR[i/a...n]q de ce flux multidestination MF[i/a...n]q en N demandes de largeur de bande individuelles VU-BR[i/a]q, ..., VU-BR[i/n]q , relatives aux N flux monodestination virtuels VUF[i/a]q, ..., VUF[i/n]q équivalents à ce flux multidestination. A la sortie de l'étape 30, sont fournies, pour chaque module d'entrée ITMi, les demandes de largeur de bande individuelles VU-BR[i/a]q, ..., VU-BR[i/n]q de l'ensemble des flux monodestination virtuels correspondant à chacun des flux multidestination provenant du module ITMi.

L'étape 32 de la figure 7 correspond à l'étape 10 de la figure 4 et constitue la première étape dans le mécanisme de contrôle de flux. A cette étape, le mécanisme de contrôle de flux prépare, pour chacun des couples (ITMi, OTMj) d'un module d'entrée et d'un module de sortie, un paramètre de demande de largeur de bande BRi/j par couple de module; ce paramètre est obtenu en cumulant :

- les demandes de largeur de bande individuelles U-BR[i/j]p des différents flux monodestination réels UF[i/j]p relatifs à ce couple de modules, ainsi que
- les demandes de largeur de bande individuelles VU-BR[i/j]q converties pour les différents flux monodestination virtuels VUF[i/j]q, également relatifs à ce couple de modules, et qui correspondent à des flux multidestination MF [i/a...n]q ayant comme origine le module d'entrée et comportant le module de sortie OTMj de ce couple parmi leurs N modules de sortie destinataires.

En sortie de l'étape 32 sont donc fournis des paramètres de demandes de largeur de bande BRi/j pour chacun des couples (ITMi, OTMj); ces paramètres, comme le symbolise la flèche 34 sont appliqués comme entrée de la deuxième étape 36 du mécanisme de contrôle de flux effectuée pour chaque module de sortie OTMj donné. Cette deuxième étape est une étape de partage de la largeur de bande disponible pour l'ensemble du trafic de cellules vers ce module de sortie, c'est-à-dire pour le trafic de cellules des flux monodestination réels et virtuels relatifs aux différents couples de modules (ITMi/OTMj) ayant ce même module de sortie OTMj donné comme destinataire. Elle est mise en oeuvre comme l'étape 14 de la figure 4, le mécanisme de contrôle de flux fonctionnant normalement, c'est-à-dire comme décrit plus haut avec les flux monodestination réels.

La troisième étape du mécanisme de contrôle de flux est symbolisée sur la figure 7 par la flèche 38; il s'agit, comme à la figure 4, d'une étape de fourniture, à chacun des modules d'entrée ITMi et pour chacun des couples de modules (ITMi, OTMj), du paramètre d'allocation de largeur de bande par couple BGi/j. Comme la deuxième étape, cette troisième étape du mécanisme de contrôle de flux s'effectue normalement, comme si le mécanisme de contrôle de flux ne traitait que des flux monodestination réels.

En termes de trafic, l'invention propose donc de considérer, pour un conduit virtuel d'entrée / sortie VIEPi/j correspondant à un couple (ITMi, OTMj) d'un module d'entrée ITMi et d'un module de sortie OTMj, un trafic de cellules monodestination réelles et un trafic de cellules monodestination virtuelles correspondant aux branches des flux multidestination partant du module d'entrée ITMi et comprenant le module de sortie OTMj parmi leurs modules de sortie destinataires. La décomposition d'un flux multidestination en une pluralité de flux monodestination virtuels et la conversion de la demande de largeur de bande de ce flux multidestination permettent d'utiliser sans modification les deuxième et troisième étapes du mécanisme de contrôle de flux; la première étape n'est modifiée que par la détermination des paramètres de demande de largeur de bande par couple, qui prend en compte les demandes de largeur de bande individuelles des flux monodestination virtuels équivalents.

La figure 7 montre encore la quatrième étape 40 du procédé. Cette quatrième étape correspond sensiblement à la quatrième étape 18 de la figure 4. Dans chaque module d'entrée ITMi, après réception des paramètres d'allocation de largeur de bande par couple fournis à la troisième étape, le mécanisme de contrôle de flux peut alors répartir la largeur de bande allouée par couple BGi/j entre les différents flux monodestination, réels comme virtuels. La répartition de cette largeur de bande allouée par couple en valeurs d'allocation de largeur de bande individuelle U-BR[i/j]p pour chacun des flux monodestination réels permet de définir, pour chacun des flux monodestination réels, un débit de service de cellules SSR[i/j]p. La solution décrite ici est donc sans incidence sur le fonctionnement normal du mécanisme de contrôle de flux pour ce qui concerne les flux monodestination réels. La quatrième étape de la figure 7 peut donc être mise en oeuvre sans modifications du mécanisme de contrôle de flux.

On donne maintenant un exemple de répartition de la largeur de bande allouée par couple BGi/j relative à un conduit virtuel d'entrée / sortie VIEPi/j, correspondant à un couple (ITMi, OTMj) d'un module d'entrée ITMi et d'un module de sortie OTMj, tel qu'effectué à l'étape 40. Dans l'exemple, le partage de la largeur de bande allouée par couple BGi/j s'effectue en proportion des demandes de largeur de bande individuelles U-BR[i/j]p, ou respectivement VU-BR[i/j]q, initialement exprimées pour chacun des flux monodestination relatifs à ce couple, flux monodestination réels UF[i/j]p, ou respectivement flux multidestination virtuels VUF[i/j]q. Pour chaque conduit virtuel d'entrée / sortie VIEPi/j, on peut noter BRi/j la somme des demandes de largeur de bande individuelles des flux monodestination réels et des flux monodestination virtuels, ce qui s'écrit :

$$BR_{i/j} = \sum_{p} U\text{-}BR[i/j]p + \sum_{q} VU\text{-}BR[i/j]q$$

Avec cette notation, la répartition en allocations de largeur de bande individuelles, effectuée proportionnellement aux demandes de largeur de bande individuelles respectives, s'écrit :

pour les flux monodestination réels

$$U\text{-}BG[i/j]p = BG_{i/j} \times U\text{-}BR[i/j]p \; / \; BR_{i/j}$$

et pour les flux monodestination virtuels

$$VU\text{-}BG[i/j]q = BG_{i/j} \times VU\text{-}BR[i/j]q \; / \; BR_{i/j}$$

Cette règle de répartition utilisable à l'étape 40 de la figure 7 s'applique pour toutes les formes possibles de demandes de largeur de bande, notamment pour des demandes de largeur de bande telles que celles exprimées par des paramètres des types mentionnés plus haut à titre d'exemple, dont la valeur est déterminée en fonction du nombre de cellules appartenant à ce flux et qui sont stockées dans les mémoires tampon du module d'entrée, ou bien déterminée en fonction du poids relatif de la priorité associé à ce flux. Il reste bien sûr également possible d'utiliser d'autres règles pour la répartition de la largeur de bande allouée par couple que la règle de proportion aux demandes de largeur de bande individuelles, qui vient d'être proposée en exemple.

A l'issue de la quatrième étape, une largeur de bande individuelle est allouée à chacun des flux monodestination réels. Comme le montre la flèche 42 vers le mécanisme de gestion files d'attente, cette largeur de bande allouée individuelle est utilisée pour déterminer le débit de service de cellules SSR[i/j]p pour chacun de ces flux monodestination réels, de façon similaire à ce qui est proposé à la figure 4.

La figure 7 montre aussi une étape complémentaire de détermination 44 d'allocation de largeur de bande individuelle pour chacun des flux multidestination. Cette étape de détermination de largeur de bande allouée individuelle MBG[I/a...n]q à un flux multidestination MF[i/a...n]q s'effectue en tenant compte des différentes allocations de largeur de bande individuelles effectuées à l'étape 40 pour chacun des N flux monodestination virtuels, qui composent ce flux multidestination. En d'autres termes, pour chaque flux multidestination MF[i/a...n]q, la largeur de bande allouée individuelle M-BG[i/a...n]q est une fonction des différentes largeurs de bandes individuelles VU-BG[i/a]]q, .. , VU-BG[i/n]q allouées aux différents flux monodestination virtuels VUF[i/a]q, ... , VUF[i/n]q qui composent le flux multidestination.

En sortie de l'étape complémentaire 44 est donc fournie, pour chaque flux multidestination MF[i/a...n]q, une largeur de bande allouée individuelle MBG[i/a...n]q. Cette valeur de largeur de bande allouée peut ensuite, comme le symbolise la flèche 46, être transmise à un mécanisme 48 de gestion des files d'attente pour déterminer le débit de service de cellules SSR[i/a...n]q pour chaque flux multidestination.

Plus précisément, l'étape complémentaire 44 peut s'effectuer de la façon suivante : pour chaque flux multidestination MF[i/a...n]q, la largeur de bande allouée individuelle M-BG[i/a...n]q est inférieure ou égale à la plus petite valeur des largeurs de bande allouées individuelles VU-BG[i/a]q, ... , VU-BG[i/n]q réparties à l'étape 40 pour les différents flux monodestination virtuels VUF[i/a]q, ... , VUF[i/n]q qui composent le flux multidestination. Cette solution revient à imposer que le trafic effectif des cellules copiées par le réseau de commutation sur chacune des N branches d'un flux multidestination n'excède pas la largeur de bande allouée pour l'une quelconque de ces N branches. En d'autres termes, lorsque les cellules sont copiées dans le réseau de commutation lui-même, le trafic de cellules dans un flux multidestination est limité par la largeur de bande acceptable sur la branche du flux multidestination pour laquelle la largeur de bande allouée est la plus faible. Ceci peut donc s'écrire, pour tout flux multidestination MF[i/a...n]q :

$$\text{M-BG[i/a...n]q} \leq \text{Min} \{ \text{VU-BG[i/a]q}, ..., \text{VU-BG[i/n]q} \}$$

ou, pour la plus grande valeur possible de largeur de bande allouée à chaque flux multidestination :

$$\text{M-BG[i/a...n]q} = \text{Min} \{ \text{VU-BG[i/a]q}, ..., \text{VU-BG[i/n]q} \}$$

Cette étape complémentaire 44, en quelque sorte inverse de l'étape préalable de conversion, permet ainsi d'appliquer l'allocation de largeur de bande par le mécanisme de contrôle de flux non seulement à des flux monodestination, mais aussi à des flux multidestination.

Le procédé de l'invention, en considérant un flux multidestination comme une pluralité de flux monodestination virtuels, permet de partager la largeur de bande disponible dans un noeud de commutation asynchrone non seulement entre des flux monodestination, mais aussi entre des flux multidestination. L'invention permet d'utiliser les mécanismes de contrôle de flux existants, par le simple ajout

- d'une étape préalable de conversion de la demande de largeur de bande individuelle d'un flux multidestination en des demandes de largeur de bande individuelles des flux monodestination virtuels qui lui sont équivalent, et
- d'une étape complémentaire de détermination de la largeur de bande individuelle allouée à un flux multidestination à partir des largeurs de bande individuelles allouées aux flux monodestination virtuels qui lui sont équivalents.

Du point de vue d'un noeud de commutation, le procédé peut être mis en oeuvre en prévoyant au niveau des modules d'entrée

- un circuit de conversion de la demande de largeur de bande individuelle d'un flux multidestination en des demandes de largeur de bande individuelles des flux monodestination virtuels qui lui sont équivalents et
- un circuit de détermination de la largeur de bande individuelle allouée à un flux multidestination à partir des largeurs de bande individuelles allouées aux flux monodestination virtuels qui lui sont équivalents.

Comme cela apparaît clairement à l'homme du métier, ces circuits peuvent impliquer des moyens matériels, notamment processeurs et mémoires, ainsi que des moyens logiciels appropriés.

## Revendications

1. Procédé de partage de la largeur de bande de commutation disponible pour transférer des cellules de flux monodestination et multidestination dans un noeud de commutation asynchrone, dans lequel

   - n1 modules d'entrées (ITM1, ..., ITMi, ..., ITMnl) sont interconnectés avec n2 modules de sortie (OTM1, ..., OTMj, ..., OTMn2) par un réseau de commutation (2) de cellules qui transfère chaque cellule d'un module d'entrée vers au moins un module de sortie;
   - ledit réseau de commutation (2) achemine une cellule transmise par un module d'entrée, vers un seul module de sortie destinataire donné (OTMd) dans le cas d'une cellule d'un flux monodestination (UF), et vers N modules de sortie destinataires (OTMa, ..., OTMn) donnés, parmi les n2 modules de sortie du noeud, dans le cas d'une cellule d'un flux multidestination (MF), ce réseau générant lui-même les N cellules copiées correspondantes à partir de la cellule transmise par un module d'entrée pour le flux multidestination;
   - chaque module d'entrée est doté de mémoires tampon (3) permettant un stockage temporaire des cellules desdits flux monodestination et multidestination, et le départ de ces cellules stockées des mémoires tampon vers ledit réseau de commutation est commandé à des temps de service qui sont fonction d'un débit de service de cellules attribué à chacun des flux de cellules;
   - un mécanisme interne de contrôle de flux effectue une première étape (32) de préparation d'un paramètre de demande de largeur de bande (BRi/j) pour chacun des couples de modules (ITMi/OTMj) relatif à un module d'entrée (ITMi) donné et à un module de sortie (OTMj) donné, en cumulant les différentes demandes de largeur de bande individuelles (U-BR[i/j]p) des différents flux monodestination (UF[i/j]p) relatifs à ce couple de modules, ensuite une seconde étape (36) de partage, pour chaque module de sortie (OTM$_j$) donné, de la largeur de bande disponible pour le trafic de cellules de l'ensemble des flux monodestination ayant ce même module de sortie (OTMj) donné comme destinataire, en fonction des paramètres de demande de largeur de bande (BRi/j) respectifs préparés pour les différents couples de modules (ITMi, OTMj) ayant ce même module de sortie (OTMj) donné comme destinataire, puis une troisième étape (38) de fourniture, à chacun des modules d'entrée (ITMi) et pour chacun des couples de modules (ITMi/OTMj), d'un paramètre d'allocation de largeur de bande (BGi/j), et enfin une quatrième étape (40) de répartition, pour chacun des couples de modules (ITMi, OTMj), déterminant, à partir du paramètre d'allocation de largeur de bande (BGi/j) pour ce couple, l'allocation de largeur de bande individuelle (U-BG[i/j]p) répartie pour chacun des flux monodestination (UF[i/j]p) relatifs à ce couple, cette l'allocation de largeur de bande (U-BG[i/j]p) constituant ledit débit de service de cellules (SSR[i/j]p) attribué à chacun de ces flux;
   ledit procédé étant **caractérisé**
   - **en ce que** l'on considère le transfert d'une cellule d'un flux multidestination (MF[i/a...n]q) à travers le réseau de commutation vers N modules de sortie destinataires (OTMa, ..., OTMn) donnés, comme étant équivalent au transfert simultané de N cellules de N flux monodestination virtuels (VUF[i/a]q, ..., VUF[i/n]q) respectifs vers ces mêmes N modules de sortie destinataires (OTMa, ..., OTMn) ;
   - **en ce qu'**il comprend en outre une étape (30) de conversion préalable à ladite première étape, dans chacun des modules d'entrée (ITMi), de la demande de largeur de bande individuelle (M-BR[i/a...n]q) de chaque flux multidestination (MF[i/a...n]q) en N demandes de largeur de bande individuelles (VU-BR[i/a]q, ..., VU-BR[i/n]q) relatives auxdits N flux monodestination virtuels (VUF[i/a]q, ..., VUF[i/n]q) équivalents relatifs à ce flux multidestination ;
   - **en ce que** ladite première étape (32) de préparation, pour chacun des couples de modules (ITMi, OTMj), d'un paramètre de demande de largeur de bande (BRi/j) est effectuée en cumulant alors les demandes de largeur de bande individuelles (U-BR[i/j]p) des différents flux monodestination réels (UF[i/j]p) relatifs à ce couple de modules, ainsi que les demandes de largeur de bande individuelles (VU-BR[i/j]q) converties pour les différents flux monodestination virtuels (VUF[i/i]q), également relatifs à ce couple de modules;
   - **en ce que** ledit mécanisme interne de contrôle de flux effectue lesdites seconde étape (36) de partage et troisième étape (38) de fourniture, sur la base de paramètres de demande de largeur de bande (BRi/j) et de paramètres d'allocation de largeur de bande (BGi/j), par couple de modules (ITMi/OTMj) ainsi obtenus ;
   - **en ce que** ladite quatrième étape (40) de répartition, dudit mécanisme interne de contrôle de flux, détermine alors, à partir de chacun des paramètres d'allocation de largeur de bande (BGi/j) par couple de modules, l'allocation de largeur de bande individuelle (U-BG[i/j]p) répartie pour chacun des flux monodestination réels (UF[i/j]p) relatifs à ce couple, ainsi que l'allocation de largeur de bande individuelle (VU-BG[i/i]q) répartie pour chacun des flux monodestination virtuels (VUF[i/j]q), également relatifs à ce couple de modules, qui correspondent à des flux multidestination (MF[i/a...n]q) ayant le module de sortie (OTMj) de ce couple parmi ses N modules de sortie destinataires; et

- **en ce qu'**il comprend une étape complémentaire (44) de détermination de l'allocation de largeur de bande individuelle (M-BG[i/a...n]q) pour chacun des flux multidestination (MF[i/a...n]q), en tenant compte des différentes allocations de largeur de bande individuelles (VU-BG[l/a]q, ..., VU-BG[i/n]q) réparties pour chacun des N flux monodestination virtuels (VUF[i/a]q, ..., VUF[i/n]q) équivalents relatifs à ce flux multidestination (MF[i/a...n]q).

**2.** Procédé selon la revendication 1, **caractérisé en ce que** ladite étape (30) préalable de conversion, dans chacun des modules d'entrée (ITMi), détermine, pour chaque flux multidestination (MF[i/a...n]q), N paramètres de demande de largeur de bande individuelles (VU-BR[i/a]q, ..., VU-BR[i/n]q), pour lesdits N flux monodestination virtuels (VUF[i/a]q, ..., VUF[i/n]q) équivalents relatifs à ce flux multidestination, dont les valeurs sont toutes égales à la valeur du paramètre de demande de largeur de bande individuelle (M-BR[i/a...n]q) de ce flux multidestination.

**3.** Procédé selon la revendication 1, **caractérisé en ce que** ladite demande de largeur de bande individuelle de chacun des différents flux monodestination (U-BR[i/j]p) et multidestination (MF[i/a ... n]q) est un paramètre dont la valeur est déterminée en fonction de nombre de cellules, appartenant à ce flux, qui sont stockées dans les mémoires tampon du module d'entrée.

**4.** Procédé selon la revendication 1, **caractérisé en ce que** ladite demande de largeur de bande individuelle de chacun des différents flux monodestination (U-BR[i/j]p) et multidestination (MF[i/a...n]q) est un paramètre dont la valeur est déterminée en fonction d'un indicateur de priorité affecté à ce flux dans le module d'entrée.

**5.** Procédé selon la revendication 1, **caractérisé en ce que**, lors de ladite étape (44) complémentaire de détermination, la valeur de l'allocation de largeur de bande individuelle (M-BG[l/a...n]q), pour chacun des flux multidestination (MF[i/a...n]q), est déterminée comme étant au plus égale à la plus petite valeur parmi les N valeurs d'allocation de largeur de bande individuelles (VU-BG[l/a]q, ..., VU-BG[i/n]q) réparties pour chacun des N flux monodestination virtuels (VUF[i/a]q, ..., VUF[i/n]q) équivalents relatifs à ce flux multidestination (MF[i/a...n]q).

**6.** Un noeud de commutation asynchrone, avec n1 modules d'entrées ITM1, ..., ITMi, ..., ITMnl interconnectés avec n2 modules de sortie OTM1, ..., OTMj, ..., OTMn2 par un réseau de commutation de cellules (2), **caractérisé par** des moyens de mise en oeuvre du procédé selon l'une des revendications 1 à 5.

**Claims**

**1.** A method for sharing the available switching bandwidth for transferring cells of unicast and multicast flows in an asynchronous switching node, in which method

- n1 input modules (ITM1, ..., ITMi, ..., ITMn1) are interconnected with n2 output modules (OTM1, ..., OTMj, ..., OTMn2) by a cell switching network (2) which transfers each cell from an input module to at least one output module;
- said switching network (2) routes a cell transmitted by an input module to a single given recipient output module (OTMd) in the case of a cell of a unicast flow (UF), and to N given recipient output modules (OTMa, ..., OTMn), among the n2 output modules of the node, in the case of a cell of a multicast flow (MF), this network itself generating the corresponding N copied cells from the cell transmitted by an input module for the multicast flow;
- each input module is equipped with buffer stores (3) for temporarily storing cells of said unicast and multicast flows, and the departure of these stored cells from buffer stores to said switching network is controlled at service times that depend on a cell service rate attributed to each of the flows of cells;
- an internal flow control mechanism performs a first step (32) for preparing a bandwidth request parameter (BRi/j) for each of the module pairs (ITMi/OTMj) relating to a given input module (ITMI) and a given output module (OTMj), by cumulating the various individual bandwidth requests (U-BR[i/j]p) of the various unicast flows (UF[i/j]p) associated with this module pair, then a second step (36) for sharing, for each given output module (OTMj), the bandwidth available for the cell traffic from all the unicast flows having this same given output module (OTMj) as recipient, according to the respective bandwidth request parameters (BRi/j) prepared for the various module pairs (ITMi, OTMj) having this same given output module (OTMj) as recipient, then a third step (38) for supplying, to each of the input modules (ITMi) and for each of the module pairs (ITMi/OTMj), a bandwidth allocation parameter (BGi/j), and finally a fourth step (40) for distribution, for each of the module pairs (ITMi, OTMj), determining, based on the bandwidth allocation parameter (BGi/j) for this pair, the individual bandwidth allocation (U-BG[i/j]p) distributed for each of the unicast flows (UF[i/j]p) associated with this pair, this bandwidth allocation (U-BG[i/j]p) forming said cell service rate (SSR[i/j]p) attributed to each of these flows; said method being **characterised**

- **in that** the transfer of a cell of a multicast flow (MF[i/a...n]q) via the switching network to N given recipient output modules (OTMa, ..., OTMn) is considered as being equivalent to the simultaneous transfer of N cells of N respective virtual unicast flows (VUF[i/a]q, ..., VUF[i/n]q) to these same N recipient output modules (OTMa, ..., OTMn);

- **in that** it additionally includes a step (30) for converting before said first step, in each of the input modules (ITMi), the individual bandwidth request (M BR[i/a...n]q) of each multicast flow (MF[i/a...n]q) to N individual bandwidth requests (VU-BR[i/a]q, ..., VU-BR[i/n]q) associated with said N equivalent virtual unicast flows (VUF[i/a]q, ..., VUF[i/n]q) associated with this multicast flow;

- **in that** said first step (32) for preparing, for each of the module pairs (ITMi, OTMj), a bandwidth request parameter (BRi/j) is performed therefore by cumulating the individual bandwidth requests (U-BR[i/j]p) of the various real unicast flows (UF[i/j]p) associated with this module pair, and the individual bandwidth requests (VU-BR[i/j]q) converted for the various virtual unicast flows (VUF[i/j]q), also associated with this module pair;

- **in that** said internal flow control mechanism performs said second step (36) of sharing and third step (38) of supplying, based on bandwidth request parameters (BRi/j) and bandwidth allocation parameters (BGi/j), per module pair (ITMi/OTMj), thus obtained;

- **in that** said fourth step (40) of distribution, of said internal flow control mechanism, then determines, based on each of the bandwidth allocation parameters (BGi/j) per module pair, the individual bandwidth allocation (U-BG[i/j]p) distributed for each of the real unicast flows (UF[i/j]p) associated with this pair, and the individual bandwidth allocation (VU-BG[i/j]q) distributed for each of the virtual unicast flows (VUF[i/j]q), also associated with this module pair, which correspond to multicast flows (MF[i/a...n]q) having the output module (OTMj) of this pair among its N recipient output modules; and

- **in that** it comprises an additional step (44) for determining the individual bandwidth allocation (M-BG[i/a...n]q) for each of the multicast flows (MF[i/a...n]q), taking into account the various individual bandwidth allocations (VU-BG[I/a]q, ..., VU-BG[i/n]q) distributed for each of the N equivalent virtual unicast flows (VUF[i/a]q, ..., VUF[i/n]q) associated with this multicast flow (MF[i/a...n]q).

2. A method according to claim 1, **characterised in that** said preliminary step (30) of conversion, in each of the input modules (ITMi), determines, for each multicast flow (MF[i/a...n]q), N individual bandwidth request parameters (VU-BR[i/a]q, ..., VU-BR[i/n]q), for said N equivalent virtual unicast flows (VUF[i/a]q, ..., VUF[i/n]q) associated with this multicast flow, the values of which are all equal to the value of the individual bandwidth request parameter (M-BR[i/a...n]q) of this multicast flow.

3. A method according to claim 1, **characterised in that** said individual bandwidth request of each of the various unicast flows (U-BR[i/j]p) and multicast flows (MF[i/a...n]q) is a parameter having a value that is determined according to the number of cells, belonging to this flow, which are stored in the buffer stores of the input module.

4. A method according to claim 1, **characterised in that** said individual bandwidth request of each of the various unicast flows (U-BR[i/j]p) and multicast flows (MF[i/a...n]q) is a parameter having a value that is determined according to a priority indicator assigned to this flow in the input module.

5. A method according to claim 1, **characterised in that**, during said additional step (44) of determination, the value of the individual bandwidth allocation (M-BG[I/a...n]q), for each of the multicast flows (MF[i/a...n]q), is determined as being at most equal to the smallest value among the N individual bandwidth allocation values (VU-BG[I/a]q, ..., VU-BG[i/n]q) distributed for each of the N equivalent virtual unicast flows (VUF[i/a]q, ..., VUF[i/n]q) associated with this multicast flow (MF[i/a...n]q).

6. An asynchronous switching node, with n1 input modules ITM1, ..., ITMi, ..., ITMn1 interconnected with n2 output modules OTM1, ..., OTMj, ..., OTMn2 by a cell switching network (2), which node is **characterised by** means for implementing the method according to any one of claims 1 to 5.

**Patentansprüche**

1. Verfahren zur Teilung der verfügbaren Vermittlungsbandbreite zur Übertragung von Einfachsendefluss- und Mehrfachsendefluss-Zellen in einem asynchronen Vermittlungsknoten, worin

- n1 Eingangsmodule (ITM1, ..., ITMi, ..., ITMn1) mit n2 Ausgangsmodulen (OTM1, ..., OTMj, ..., OTMn2) über ein Zellenvermittlungsnetz (2), welches jede Zelle von einem Eingangsmodul an mindestens ein Ausgangsmodul überträgt, verbunden sind;
- das besagte Vermittlungsnetz (2) eine von einem Eingangsmodul übertragene Zelle an ein einziges gegebenes Empfängerausgangsmodul (OTMd) im Fall einer Zelle eines Einfachsendeflusses (UF), und an N gegebene Emfängerausgangsmodule (OTMa, ..., OTMn) unter den n2 Ausgangsmodulen des Knotens im Fall einer Zelle eiens Mehrfachsendeflusses (MF) weiterleitet, wobei dieses Netz selbst die entsprechenden N Kopien der von einem Eingangsmodul übertragenen Zelle für den Mehrfachsendefluss erzeugt;
- jedes Eingangsmodul mit Zwischenspeichern (3) versehen ist, welche ein temporäres Speichern der Zellen der besagten Einfach- und Mehrfachsendeflüsse ermöglichen, und das Versenden dieser gespeicherten Zellen von den Zwischenspeichern an das besagte Vermittlungsnetz zu Dienstzeiten erfolgt, welche von einer jedem Zellenfluss zugeteilten Zellen-Dienstdurchflussmenge abhängig sind;
- ein interner Mechanismus zur Steuerung des Sendeflusses eine erste Etappe (32) zur Vorbereitung eines Bandbreitenanfrage-Parameters (BRi/j) für ein jedes der ein gegebenes Eingangsmodul (ITMi) und ein gegebenes Ausgangsmodul (OTMj) betreffenden Modulpaare (ITMi/OTMj) durchführt, indem die verschiedenen individuellen Bandbreiten-Anfragen (U-BR[i/j]p) der verschiedenen dieses Modulpaar betreffenden Einfachsendeflüsse (UF[i/j]p) kumuliert werden, und anschließend eine zweite Etappe (36) zur Teilung, für jedes gegebene Ausgangsmodul (OTMj), der verfügbaren Bandbreite für den Zellenverkehr der gesamten Einfachsendeflüsse, welche dieses selbe gegebene Ausgangsmodul (OTMj) als Empfänger haben, entsprechend den für die verschiedenen Modulpaare (ITMi, OTMj), welche dasselbe gegebene Ausgangsmodul (OTMj) als Empfänger haben, vorbereiteten Bandbreitenanfrage-Parameter (BRi/j), anschließend eine dritte Etappe (38) zur Bereitstellung eines Bandbreitenzuteilungsparameters (BGi/j) für jedes der Eingangsmodule (ITMi) und für jedes der Modulpaare (ITMi/OTMj), und schließlich eine vierte Etappe (40) zur Verteilung, für ein jedes der Modulpaare (ITMi, OTMj, welche ausgehend von dem Bandbreitenzuteilungs-Parameter (BGi/j) für dieses Paar, die Zuteilung einer individuellen Bandbreite (U-BG[i/j]p), die für einen jeden der dieses Paar betreffenden Einfachsendeflüsse (UF[i/j]p) verteilt wird, bestimmt, und diese Bandbreitenzuteilung (U-BG[i/j]p) die besagten, einem jeden dieser Flüsse zugewiesenen Zellen-Dienstdurchflussmenge (SSR[i/j]p) bildet;

wobei das besagte Verfahren **dadurch gekennzeichnet ist,**

- **dass** man die Übertragung einer Zelle eines Mehrfachsendeflusses (MF[i/a...n]q) über das Vermittlungsnetz an N gegebene Empfängerausgangsmodule (OTMa, ..., OTMn) als gleichwertig mit der simultanen Übertragung von N Zellen von jeweiligen N virtuellen Einfachsendeflüssen (VUF[i/a]q), ..., VUF[i/n]q) an diese selben N Empfängerausgangsmodule (OTMa, ..., OTMn), betrachtet;
- **dass** es außerdem vor Ausführung der besagten ersten Etappe in einem jeden der Eingangsmodule (ITMi) eine Umwandlungsetappe (30) der individuellen Bandbreiten-Anfrage (M-BR[i/a...n]q) jedes Mehrfachsendeflusses (MF[i/a...n]q) in N individuelle Bandbreiten-Anfragen (VU-BR[i/a]q), ..., (VU-BR[i/n]q), welche den besagten gleichwertigen, diesem Mehrfachsendefluss entsprechenden N virtuellen Einfachsendeflüsse (VUF[i/a]q), ..., VUF[i/n]q) entsprechen, umfasst;
- **dass** die besagte Vorbereitungsetappe (32) eines Bandbreitenanfrage-Parameters (BRi/j) für ein jedes der Modulpaare (ITMi, OTMj) durch anschließendes Kumulieren der individuellen Bandbreiten-Anfragen (U-BR[i/j]q) der verschiedenen reellen Einfachsendeflüsse (UF[i/j]p), welche diesem Modulpaar entsprechen, sowie der für die verschiedenen virtuellen Einfachsendeflüsse (VUF[i/j]q), welche ebenfalls diesem Modulpaar entsprechen, umgewandelten individuellen Bandbreiten-Anfragen (VU-BR[i/j]q) erfolgt;
- **dass** der besagte interne Mechanismus zur Steuerung des Sendeflusses die besagte zweite Etappe (36) zur Teilung und die besagte dritte Etappe (38) zur Bereitstellung, auf Basis der Bandbreitenanfrage-Parameter (BRi/j) und der Bandbreitenzuteilungs-Parameter (BGi/j), je so gebildetes Modulpaar (ITMi/OTMj) durchführt;
- **dass** die besagte vierte Etappe (40) zur Verteilung, des besagten internen Mechanismus zur Steuerung des Sendeflusses, anschließend, ausgehend von einem jeden der Bandbreitenzuteilungs-Parameter (BGi/j) je Modulpaar, die für einen jeden der dieses Paar betreffenden reellen Einfachsendeflüsse (UF[i/j]p) verteilte individuelle Bandbreitenzuteilung (U-BG[i/j]p), sowie die individuelle Bandbreitenzuteilung (VU-BG[i/j]q), welche für einen jeden der ebenfalls dieses Modulpaar betreffenden virtuellen Einfachsendeflüsse (VUF[i/j]q) verteilt sind, die Mehrfachsendeflüssen (MF[i/a...n]q) entsprechen, welche das Ausgangsmodul (OTMj) dieses Paars unter ihren N Empfängerausgangsmodule haben, bestimmt; und
- **dass** es eine zusätzliche Etappe (44) zur Bestimmung der individuellen Bandbreitenzuteilung (M-BG[i/a...n]q) für einen jeden der Mehrfachsendeflüsse (MF[i/a...n]q) umfasst, unter Berücksichtigung der verschiedenen individuellen Bandbreitenzuteilungen (VU-BG[1/a]q, ..., VU-BG[i/n]q), welche für einen jeden der gleichwertigen, diesen Mehrfachsendefluss (MF[i/a...n]q) betreffenden N virtuellen Einfachsendeflüsse (VUF[i/a]q, ..., VUF[i/n]q) verteilt sind.

2. Verfahren nach Anspruch 1, **dadurch gekennzeichnet, dass** die besagte vorausgegangene Umwandlungsetappe (30), in einem jeden der Eingangsmodule (ITMi), für jeden Mehrfachsendefluss (MF[i/a...n]q) N individuelle Bandbreitenanfrage-Parameter (VU-BR[i/a]q), ..., (VU-BR[i/n]q) für die besagten gleichwertigen N virtuellen Einfachsendeflüsse (VUF[i/a]q), ..., (VUF[i/n]q), welche diese Mehrfachsendeflüsse betreffen, deren Werte alle gleichwertig sind mit dem Wert des individuellen Bandbreitenanfrage-Parameters (M-BR[i/a...n]q) dieses Mehrfachsendeflusses sind, bestimmt.

3. Verfahren nach Anspruch 1, **dadurch gekennzeichnet, dass** die besagte individuelle Bandbreiten-Anfrage eines jeden der verschiedenen Einfachsendeflüsse (U-BR[i/j]p) und Mehrfachsendeflüsse (MF[i/a...n]q) ein Parameter ist, dessen Wert entsprechend der diesem Sendefluss angehörenden Anzahl von Zellen, welche in den Zwischenspeichern des Eingangsmoduls gespeichert sind, bestimmt wird.

4. Verfahren nach Anspruch 1, **dadurch gekennzeichnet, dass** die besagte individuelle Bandbreitenanfrage eines jeden der verschiedenen Einfachsendeflüsse (U-BR[i/j]p) und Mehrfachsendeflüsse (MF[i/a...n]q) ein Parameter ist, dessen Wert entsprechend einem diesem Sendefluss im Eingangsmodul zugewiesenen Prioritätsanzeiger bestimmt wird.

5. Verfahren nach Anspruch 1, **dadurch gekennzeichnet, dass** während der besagten zusätzlichen Bestimmungsetappe (44) der Wert der individuellen Bandbreitenzuteilung (M-BG[1/a...n]q) für einen jeden der Mehrfachsendeflüsse (MF[i/a...n]q) als höchstens gleichwertig mit dem kleinsten Wert unter den N individuellen Bandbreitenzuteilungen (VU-BG[1/a]q, ..., VU-BG[i/n]q), welche für einen jeden der gleichwertigen, diesen Mehrfachsendeflüsse (MF[i/a...n]q) betreffenden N virtuellen Einfachsendeflüsse (VUF[i/a]q, ..., VUF[i/n]q) verteilt sind, bestimmt wird.

6. Ein asynchroner Vermittlungsknoten mit n1 Eingangsmodulen ITM1, ..., ITMi, ..., TTMn1, welche über ein Zellenvermittlungsnetz (2) mit n2 Ausgangsmodulen OTM1, ..., OTMj, ..., OTMn2 verbunden sind, **gekennzeichnet durch** Mittel zur Implementierung des Verfahrens nach einem der Ansprüche 1 bis 5.

FIG_1

FIG_2

## FIG_3

FIG_4

## FIG_5

ITMi

MF[i/a...n]q

OTMa

OTMj

OTMn

## FIG_6

ITMi

VUF[i/a]q

VUF[i/i]q

VUF[i/n]q

OTMa

OTMj

OTMn

30

**CONVERSION DES DEMANDES DE LARGEUR DE BANDE**

MF

32

**PREPARATION PARAMETRES DE DEMANDE DE LARGEUR DE BANDE**

UF

*PARAMETRES DEMANDES*

34

36

**PARTAGE DE LA LARGEUR DE BANDE DISPONIBLE**

44

**DETERMINATION D'ALLOCATION DE LARGEUR DE BANDE DES FLUX MULTIDESTINATION**

40

**REPARTITION DE LA LARGEUR DE BANDE ALLOUEE**

*PARAMETRES D'ALLOCATION*

38

Débit de service de cellules multidestination

46

Débit de service de cellules monodestination

42

**GESTION DES FILES D'ATTENTE**  48

**FIG_7**

EP 1 359 717 B1

# EP 1 359 717 B1

## RÉFÉRENCES CITÉES DANS LA DESCRIPTION

### Documents brevets cités dans la description

- FR 0112446

### Littérature non-brevet citée dans la description

- **T. WORSTER.** *Buffering and Flow Control for Statistical Multiplexing in an ATM Switch,* Avril 1995, vol. 1, 273-277